# FASCICULE DE BREVET EUROPEEN

(11) **EP 0 524 842 B1**
(45) Date de publication et mention de la délivrance du brevet: **11.09.1996**
(21) Numéro de dépôt: 92401701.5
(22) Date de dépôt: 18.06.1992
(51) Int. Cl.: G09G 3/20, G09G 5/00

(54) **Dispositif temps réel de présentation d'images de type télévision sur un écran de visualisation**
Vorrichtung zur Fernsehbildwiedergabe in Echtzeit auf einem Anzeigebildschirm
Real time device for presenting TV images on a display panel

(30) Priorité: 25.06.1991 FR 9107800
(43) Date de publication de la demande: 27.01.1993
(73) Titulaire: SEXTANT AVIONIQUE, F-92360 Meudon-la-Forêt (FR)
(72) Inventeur: Favot, Jean-Jacques, F-92045 Paris la Défense (FR); Martinez, Michel, F-92045 Paris la Défense (FR); Perbet, Jean-Noel, F-92045 Paris la Défense (FR)
(74) Mandataire: Benoit, Monique

(56) Documents cités:
- EP-A- 0 403 268
- EP-A- 0 427 147
- SID, DIGEST OF TECHNICAL PAPERS vol. 18, 12 Mai 1987, NEW ORLEANS USA, pp. 416-418; A. KOMPOLT : 'VIDEO TO LCD INTERFACE IC CONVERTS VIDEO SIGNALS INTO SIGNALS SUITABLE FOR LCD'S'* the whole document *.

## Description

La présente invention a pour objet un dispositif recevant une image de type télévision et assurant son traitement en temps réel en vue de sa présentation sur un écran de visualisation, de type et de format connus mais quelconques.

Dans certaines applications, il peut être utile de pouvoir visualiser des informations, fournies sous forme d'un standard de télévision, sur un écran qui ne soit pas forcément un tube à rayons cathodiques : c'est le cas par exemple en avionique, où l'on souhaite de plus en plus remplacer les tubes à rayons cathodiques par des écrans matriciels, à cristaux liquides par exemple.

Il faut alors assurer les conversions de format nécessaires et, autant que possible, permettre divers traitements ou transformations de l'image (zoom par exemple), le tout sans dégradation notable de l'image à visualiser, et en temps réel. On entend ici par système "temps réel" un système dont le temps de traitement est suffisamment court pour ne pas introduire de retard notable dans l'affichage de l'image. Cet aspect temps réel est bien entendu particulièrement important dans les applications où l'information affichée conditionne une décision d'un opérateur, celle d'un pilote par exemple dans le domaine de l'avionique.

La présente invention a pour objet un dispositif qui réponde à ces impératifs.

A cet effet, il utilise la technique dite de la microplage, qui consiste à faire correspondre à chacun des points de l'image incidente une petite zone, ou microplage, de pixels adjacents ; cette technique est décrite par exemple dans la demande de brevet français n° 2.619.982 au nom de THOMSON-CSF.

Plus précisément, l'invention a pour objet un dispositif de présentation d'images de type télévision sur un écran de visualisation tel que défini par la revendication 1.

Selon l'invention, la conversion et/ou le traitement sont donc réalisés pour chaque point de l'image incidente par une déformation géométrique locale particulière qui, prenant en compte un nombre limité de points, est réalisée très rapidement, au fur et à mesure de l'arrivée des points de l'image incidente, permettant ainsi au dispositif de répondre à l'exigence de temps réel.

Enfin, dans une variante de l'invention, les zones communes à deux microplages sont mélangées selon une fonction prédéterminée (moyenne, maximum, minimum...).

D'autres objets, particularités et résultats de l'invention ressortiront de la description suivante, donnée à titre d'exemple non limitatif et illustrée par les dessins annexés,qui représentent :
- la figure 1, un synoptique général du dispositif selon l'invention ;
- la figure 2, le synoptique d'un mode de réalisation du dispositif selon l'invention.

Sur ces différentes figures, les mêmes références se rapportent aux mêmes éléments.

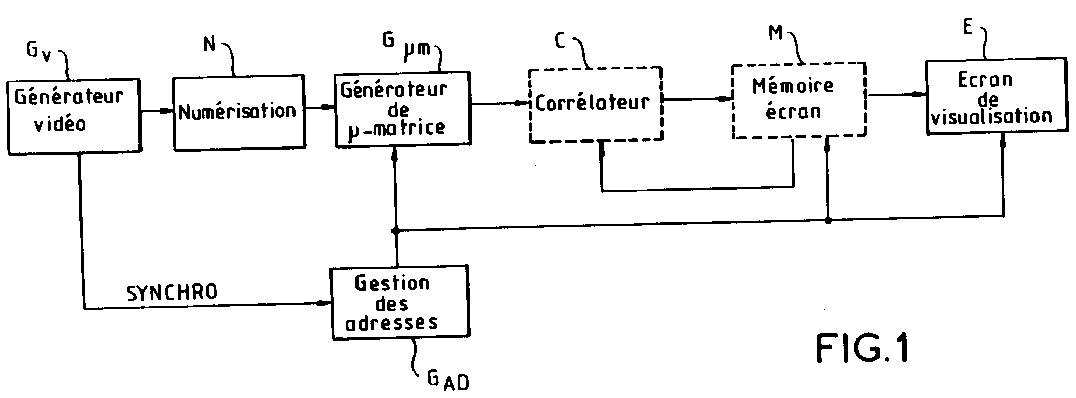

La figure 1 est donc un synoptique général du dispositif selon l'invention.

Le dispositif de présentation selon l'invention reçoit des images dites images sources ou images incidentes, fournies par un générateur vidéo G_{V} , afin de les présenter sur un écran de visualisation, repéré E sur la figure.

Le générateur vidéo G_{V} est un générateur susceptible de fournir des images monochromes ou en couleurs, selon un standard TV (par exemple 875 lignes, 625 lignes, 525 lignes, 50 Hz ou 60 Hz) ; c'est par exemple une caméra de télévision.

L'écran E est un écran qui peut être matriciel, c'est-à-dire adressable en lignes et en colonnes (L lignes et C colonnes, c'est-à-dire L lignes de C points élémentaires) selon un format quelconque mais prédéfini, dit format de restitution ; cet écran peut être monochrome ou couleur ; c'est par exemple un afficheur à cristaux liquides, à plasma, un tube à rayons cathodiques indexé (également connu sous le nom anglais de "beam index") ou un tube à rayons cathodiques plat à micro-pointes ; il peut également être constitué par un tube à rayons cathodiques classique mais doivent alors lui être adjoints des convertisseurs numériques-analogiques, les informations de sortie du dispositif selon l'invention étant fournies sous forme numérique. Dans le cas où l'image est en couleur, chaque pixel est formé en général de trois points colorés, respectivement rouge, vert et bleu, dits "sous-pixels" ; on appellera ci-après "point élémentaire" d'une image, soit un pixel si l'image est monochrome, soit un sous-pixel si l'image est en couleur.

Le dispositif selon l'invention comporte:
- un bloc N de circuits assurant la numérisation de l'image incidente, ainsi que certaines fonctions auxiliaires détaillées plus loin ;
- un bloc G_{µm} de circuits de génération de micromatrices, encore appelées microplages, une micromatrice étant engendrée pour chacun des points élémentaires de l'image incidente ;
- un bloc G_{AD} de circuits de gestion des adresses, recevant du générateur vidéo G_{V} les signaux de synchronisation ; il fournit l'information d'adresse au générateur de micromatrices G_{µm} et à l'écran E ou à une mémoire M, comme expliqué ci-après.

Dans une première variante de réalisation, la micromatrice engendrée par le bloc G_{µm} est envoyée directement, munie de son information d'adresse, à l'écran de visualisation E par l'intermédiaire, en tant que besoin, de convertisseurs analogiques-numériques.

Selon une autre variante de réalisation, les micromatrices engendrées sont stockées dans une mémoire écran M à une adresse qui est celle qu'elles occuperont sur l'écran. Dans ce cas, le bloc G_{AD} assure également la gestion des adresses de la mémoire M.

Selon encore une autre variante de réalisation, les micromatrices engendrées par le bloc G_{µm} ne sont pas affichées ou mémorisées telles quelles mais il est appliqué à leurs parties communes une fonction prédéfinie de mélange, ou corrélation, par un corrélateur C interposé entre le générateur G_{µm} et la mémoire écran M. A cet effet, le contenu de la mémoire M est susceptible d'être relu à destination du corrélateur C.

Le corrélateur C et la mémoire M n'étant pas indispensables au fonctionnement du dispositif selon l'invention, ils sont représentés en pointillés sur la figure 1.

Le fonctionnement de ce dispositif est le suivant.

L'image fournie sous forme analogique par le générateur vidéo G_{V} est numérisée au fur et à mesure par le bloc N. Le générateur de micromatrices G_{µm} contient une série de micromatrices prédéfinies en mémoire et, à chacun des points élémentaires de l'image incidente, il fait correspondre une certaine micromatrice, dans le format de restitution ; ce dernier format, dans lequel l'image est affichée sur l'écran E, peut être quelconque par rapport au format de l'image incidente, mais doit être connu du dispositif. Les micromatrices sont affichées sur l'écran E (ou mémorisées dans la mémoire M, avec ou sans corrélation des points se recouvrant) de sorte à être positionnées à partir de l'adresse du point élémentaire incident, après conversion de format, dite adresse ou point adresse de la micromatrice.

Les micromatrices sont chacune définies par leur taille (nombre de points élémentaires qui la constituent), leur forme (disposition de ces points) et leur contenu (luminance et couleur de chacun des points). Ces paramètres peuvent être choisis de façon quelconque ; il est préférable, pour des questions de taille mémoire et de temps de traitement, qu'elles ne comportent pas un nombre trop grand de points ; à titre d'exemple, des micromatrices de 4x4 points représentent un bon compromis. Une micromatrice présente par exemple un point de brillance maximum (qui peut par exemple être en son centre) les autres points de la micromatrice représentant un dégradé plus ou moins rapide, faisant par exemple une transition avec le reste de l'image. La forme d'une micromatrice peut être quelconque ; le point adresse de la micromatrice n'est pas nécessairement le centre de celle-ci et ne constitue qu'un point de référence par rapport auquel le système est capable de positionner la micromatrice.

Le choix d'une micromatrice pour un point particulier de l'image incidente est effectué en fonction bien entendu des caractéristiques de l'écran E, c'est-à-dire de son format (format de restitution), de ses niveaux de luminance et de son organisation colorimétrique (par exemple organisations périodiques connues sous les noms de QUAD, diagonale, Stripe...), mais il est également fonction de l'erreur de positionnement de la micromatrice, due comme on le verra plus loin à la conversion de format, de la forme colorimétrique de l'environnement du point adresse de la micromatrice, et enfin de l'éventuelle transformation géométrique qu'on veut faire subir à l'image incidente. On peut en effet, avec un tel dispositif, réaliser un agrandissement d'une partie de l'image incidente ou au contraire sa réduction, une rotation de l'image incidente ou, plus généralement, une déformation quelconque mais prédéfinie (en coussin par exemple, pour corriger la déformation du même nom) : la taille et la forme de chacune des micromatrices successives seront adaptées à la transformation désirée, ainsi que l'adresse des micromatrices.

Il apparaît ainsi qu'une conversion de format comme une déformation de l'image sont réalisées selon l'invention par une déformation géométrique locale, par la taille et/ou la forme de la micromatrice choisie, au fur et à mesure de l'arrivée des points de l'image incidente.

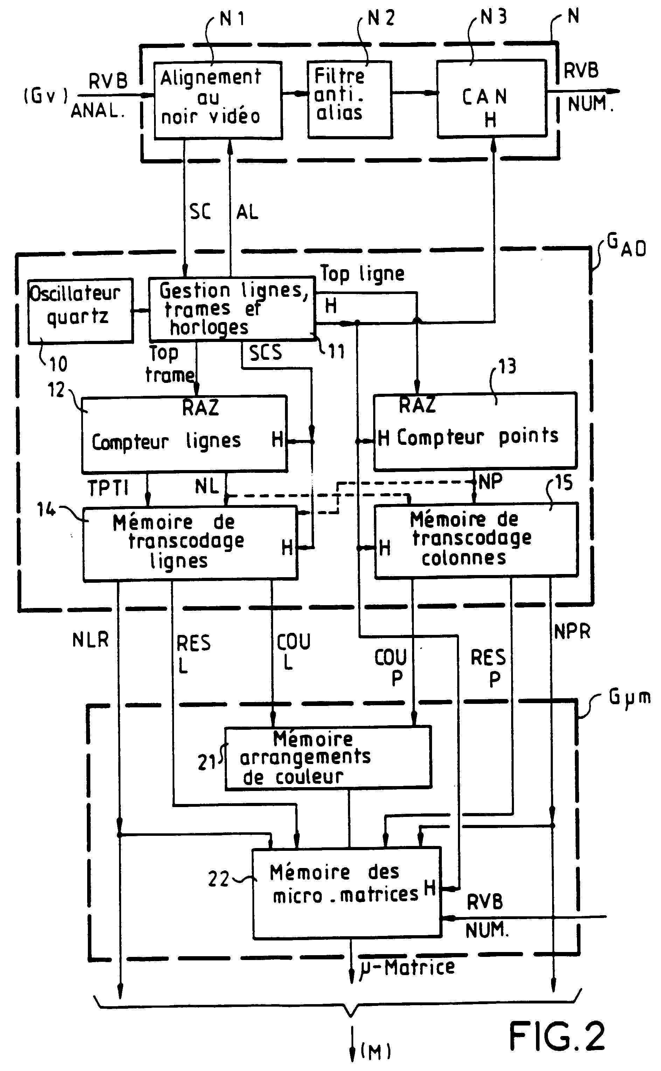

La figure 2 représente un mode de réalisation des blocs N, G_{µm} et G_{AD} du synoptique de la figure 1. A titre d'exemple, cette description est faite dans le cas d'une image incidente couleur, formée de deux trames entrelacées.

Le bloc N de numérisation reçoit donc l'information trichrome, notée RVB, sous forme analogique du générateur vidéo G_{V}. Il est à noter que le signal RVB est fourni au dispositif selon l'invention après séparation des couleurs, cette séparation étant réalisée de toute façon connue (non représentée) en amont du dispositif. Ce bloc comporte de façon classique, en amont d'un bloc de conversion analogique-numérique N₃ et successivement: un circuit N₁ d'alignement du niveau de noir de la vidéo incidente qui, de façon classique, maintient le niveau de noir à une valeur constante, et un filtre anti-alias N₂ qui, également de façon connue, réalise un filtrage passe-bas pour éliminer les défauts liés à la numérisation du signal. A cet effet, le circuit d'alignement N₁ reçoit un signal AL d'alignement au noir vidéo fourni par le bloc de gestion d'adresses G_{AD}. Le bloc de conversion N₃ est constitué par trois convertisseurs analogiques-numériques, un par couleur. Le bloc N fournit, en sortie, un signal vidéo numérisé, aligné et filtré, noté globalement RVB NUM et, comportant, pour chaque pixel, trois échantillons ou sous-pixels, R, V et B respectivement.

Le bloc G_{AD} de gestion des adresses comporte un oscillateur 10, par exemple un oscillateur à quartz, fournissant une fréquence de référence à un circuit 11 de gestion des lignes, des trames et des horloges. Ce circuit 11 reçoit le signal de synchronisation composite SC qui lui est fourni par le bloc N à partir de l'image incidente ; il engendre, à partir de ce signal et de la fréquence de référence fournie par l'oscillateur 10, un top de début de ligne, un top de début de trame, un signal H qui est l'horloge générale du système et, enfin, un signal de synchronisation composite SCS qui est synchrone du signal fourni par l'oscillateur 10. Ce circuit 11 peut être réalisé à l'aide d'un circuit logique en réseau programmable, connu sous le nom de PAL (pour "Programmable Array Logic"). Le signal d'horloge H est fourni au convertisseur N₃ où il définit la fréquence d'échantillonnage du signal incident.

Le bloc G_{AD} comporte encore un compteur 12 des lignes et un compteur 13 des points élémentaires de l'image incidente, qui ont pour fonction de compter respectivement les lignes et les points à la cadence, l'un, du signal de synchronisation SCS et, l'autre, du signal d'horloge H. Ils sont remis à zéro respectivement par le top trame et par le top ligne. Le compteur de lignes 12 fournit donc le numéro NL de la ligne courante ainsi qu'un signal TPTI indiquant s'il s'agit d'une trame paire ou d'une trame impaire ; ces informations sont fournies à une mémoire ligne 14. Le compteur de points 13 fournit, de façon analogue, à une mémoire colonne 15 le numéro NP du point courant.

A ce niveau sont achevées les opérations d'identification des adresses des points de l'image sous le standard TV incident ; est ensuite réalisé le transcodage entre format incident et format de restitution.

La mémoire 14, dite de transcodage ligne, a essentiellement pour fonction de faire correspondre au numéro NL de la ligne de l'image incidente un numéro de ligne NLR dans le format de restitution. De façon analogue, la mémoire 15 de transcodage colonne fait correspondre au numéro NP du point incident un numéro NPR de point dans le format de restitution. Par ailleurs, lorsque le format de restitution est différent du format incident, le nombre de lignes comme le nombre de points par ligne de l'image incidente sont différents de ceux de l'image restituée et ne sont pas, dans le cas général, un multiple l'un de l'autre : la conversion de format donne donc naissance à une erreur de positionnement, ou résidu du calcul de conversion et, ce, aussi bien pour la position de la ligne dans la trame (notée RESL) que pour la position du point sur la ligne (RESP). Cette information sur l'erreur de positionnement est utilisée ensuite pour sélectionner une micromatrice dont le centre de luminance sera décalé, par rapport au centre géométrique, de l'erreur précédente. Enfin, la mémoire 14 de transcodage ligne fournit la couleur de la ligne (signal noté COUL) par rapport aux lignes environnantes : en effet, tout écran ayant une organisation colorimétrique donnée et périodique (QUAD, diagonale... ), l'adresse de la ligne courant dans le format de restitution fournit une information sur la couleur de cette ligne. De façon analogue, la mémoire de transcodage colonne 15 fournit la couleur du point (COUP) par rapport à la couleur des autres points de la ligne. A ce stade, on connaît donc l'environnement colorimétrique aux alentours du point adresse de la micromatrice.

On a, en outre, représenté des liaisons en pointillés qui permettent à la mémoire de transcodage ligne 14 de recevoir le numéro NP du point courant et à la mémoire colonne 15 de recevoir le numéro NL de la ligne courante. Ces liaisons sont utilisées lorsque la transformation que l'on veut faire subir à l'image incidente n'est pas orthogonale (rotation d'image, déformation de l'image selon une figure quelconque, etc...).

Les différents signaux fournis par le bloc G_{AD} sont dirigés vers le bloc G_{µm} de génération des micromatrices, qui reçoit en outre le signal vidéo incident et numérisé RVB NUM.

Selon une première variante de réalisation, ce bloc G_{µm} peut être réalisé par une mémoire unique, dans laquelle sont enregistrées toutes les micromatrices possibles du dispositif, les signaux incidents (RVB NUM, NLR, RESL, COUL, NPR, RESP et COUP) constituant l'adressage de cette mémoire. En sortie, elle fournit une micromatrice, c'est-à-dire un ensemble de points élémentaires adjacents destinés à être mémorisés dans la mémoire écran M ou directement visualisés sur l'écran E ; l'adresse de la micromatrice (par exemple l'adresse de son centre) est constituée par les signaux NLR et NPR, respectivement numéro de ligne et numéro de point du format de restitution.

Selon une autre variante de réalisation, représentée sur la figure 2, la mémoire unique précédente est subdivisée en deux mémoires, repérées respectivement 21 et 22. On constate en effet que les arrangements de couleur fournis par les signaux COUL et COUP sont en nombre limité : on mémorise donc dans la mémoire 21 les différents arrangements de couleur possibles ; la mémoire 22, contenant les différentes micromatrices du système est donc, dans ce mode de réalisation, non plus adressée directement par les signaux COUL et COUP mais par le signal de sortie de la mémoire 21. Cela permet une réduction sensible de la taille totale de mémoire nécessaire pour le bloc G_{µm}.

La mémoire 22 contient au moins toutes les micromatrices nécessaires pour passer d'un standard TV donné à un écran matriciel de type donné. Elle peut contenir des micromatrices supplémentaires permettant certaines options, tant au niveau du format incident que du format restitué : par exemple, la mémoire 22 peut contenir toutes les micromatrices nécessaires au traitement de deux standards TV distincts ; les choix entre les différentes options sont alors indiqués aux mémoires de transcodage 14 et 15 et au bloc G_{µm}.

Pour ce qui est des déformations d'image, de la même manière, le bloc G_{µm} contient toutes les micromatrices nécessaires à la ou les déformations souhaitées ; dans le cas où plusieurs déformations sont possibles, l'option doit également être indiquée aux mémoires de transcodage et au bloc G_{µm}.

Dans une variante de réalisation, lorsque les options deviennent nombreuses, tant au niveau des formats que des déformations, et pour éviter que les mémoires de transcodage ne deviennent trop importantes, celles-ci ne contiennent plus la totalité des options possibles mais sont chargées par un calculcateur qui calcule, après le choix des options, les transcodages à effectuer.

Dans la variante où le dispositif comporte une mémoire écran M, il est possible, ainsi qu'il a été noté plus haut, d'engendrer des microplages se recouvrant partiellement et d'appliquer aux zones communes à plusieurs microplages une fonction prédéfinie de mélange, ou corrélation. Il est à noter que, dans le cas où le dispositif ne comporte pas de corrélateur et utilise une mémoire à accès simple, s'il est possible d'engendrer des microplages se recouvrant et d'écraser le contenu de la microplage déjà mémorisée, il est préférable de créer des microplages qui se juxtaposent sans recouvrement, pour des raisons de qualité de l'image restituée.

Dans la variante où on procède à une corrélation des zones communes, pour chaque micromatrice à mémoriser, on lit le contenu de la mémoire M aux adresses concernées, on mélange l'information mémorisée à l'information incidente, puis on mémorise le résultat dans la mémoire M suivant la méthode de lecture-modification-écriture. La fonction de corrélation s'applique sur chaque point élémentaire de la microplage ; il peut s'agir d'une fonction somme, moyenne, maximum, minimum ou mixte, par exemple ; on peut utiliser une fonction identique pour la totalité des points de la micromatrice, comme on peut utiliser des fonctions différentes pour une même micromatrice, une pour chaque couleur par exemple.

Du fait qu'il est nécessaire d'accéder à la mémoire écran M et pour ne pas retarder le traitement de l'image, il est préférable d'organiser la mémoire M en conséquence, c'est-à-dire en blocs adressables indépendamment et simultanément : la mémoire M devra alors comporter autant de blocs que la plus grande des micromatrices comporte de points ; de la sorte, écriture d'une part et lecture d'autre part, peuvent s'effectuer en parallèle, en un minimum de temps. Une telle structure est par exemple décrite dans la demande de brevet français n° 90.10587 au nom de SEXTANT Avionique.

Par ailleurs, dans le cas où le dispositif comporte une mémoire écran M, celle-ci est avantageusement formée de deux pages, une page recevant, au fur et à mesure de son traitement, une trame de l'image, et l'autre page, contenant la trame précédente, étant lue à destination de l'écran E.

Il apparaît donc que le dispositif selon l'invention réalise une conversion de format et/ou un traitement de l'image incidente au niveau de chaque point élémentaire de celle-ci, c'est-à-dire du sous-pixel dans le cas d'une image couleur, ce qui permet une grande souplesse dans les traitements. En outre, conversion ou traitement étant réalisés par déformation géométrique locale sur un nombre limité de points (la micromatrice), ils peuvent être faits au fur et à mesure de l'arrivée des points de l'image incidente : en effet, la génération des micromatrices comme la corrélation (dans le cas où la mémoire écran est organisée en blocs indépendants à accès simultané) sont suffisamment rapides pour pouvoir être effectuées pendant la durée d'une trame (20 ms pour un standard 50 Hz ou 16 ms pour un standard 60 Hz) et le retard total que subit l'image entre le générateur vidéo et l'affichage est donc au maximum d'une trame (lorsque le dispositif comporte une mémoire M) : on peut ainsi parler ici de dispositif temps réel.

En outre, la définition des différentes micromatrices mémorisées n'étant guère limitée les conversions de format comme les déformations peuvent être très diverses : c'est ainsi qu'il est possible avec le dispositif selon l'invention de convertir une image incidente en un format "stripe", caractérisé par un pas différent pour les lignes et les colonnes et notamment utilisé pour certains écrans à cristaux liquides, ou de réaliser des transformations d'image non orthogonales.

## Revendications

1. Dispositif de présentation d'images de type télévision sur un écran de visualisation, l'image télévision étant dite image incidente et l'image affichée sur l'écran étant dite image de restitution, caractérisé par le fait qu'il comporte :
- des moyens (N) de numérisation de l'image incidente, au fur et à mesure de la réception par le dispositif des points élémentaires formant l'image incidente ;
- des moyens (G_{AD}) de gestion d'adresses, assurant l'identification des adresses des points incidents et le transcodage de ces adresses vers le format de restitution ;
- des moyens (Gµm) de génération d'une micromatrice comportant une pluralité de points, pour chacun des points incidents et au fur et à mesure de leur arrivée, la micromatrice étant sélectionnée parmi une série de micromatrices prédéfinies quant à leurs tailles, leurs formes et leurs contenus, en fonction de la conversion de format à réaliser.

2. Dispositif selon la revendication 1, caractérisé par le fait que les moyens (G_{AD}) de gestion d'adresses comportent :
- des moyens (10, 11, 12, 13) d'identification des adresses des points de l'image incidente ;
- des moyens (14, 15) de transcodage, fournissant pour chaque point de l'image incidente, son numéro de ligne (NLR) et son numéro de point (NPR) dans le format de restitution.

3. Dispositif selon la revendication 2, caractérisé par le fait que les moyens de transcodage fournissent en outre les résidus du calcul de transcodage (RESL, RESP).

4. Dispositif selon la revendication 2, caractérisé par le fait que les moyens d'identification comportent :
- des premiers moyens (11) pour fournir, à partir du signal (SC) de synchronisation de l'image incidente, un top ligne, un top trame, un signal (H) d'horloge ;
- un compteur lignes (12) et un compteur points (13), recevant les signaux fournis par les premiers moyens et fournissant, pour chaque point de l'image incidente, son numéro de ligne (NL) et son numéro de point (NP) dans le format incident.

5. Dispositif selon les revendications 3 et 4, caractérisé par le fait que les moyens de transcodage comportent :
- une mémoire (14) de transcodage lignes recevant le signal (NL) fourni par le compteur lignes ;
- une mémoire (15) de transcodage colonnes recevant le signal (NP) fourni par le compteur points, ces deux mémoires fournissant respectivement numéro de ligne (NLR) et résidu ligne (RESL), et numéro de point (NPR) et résidu point (RESP).

6. Dispositif selon l'une des revendications 2 à 5, caractérisé par le fait que les moyens (Gµm) de génération d'une micromatrice comportent des moyens de mémorisation de la série de micromatrices prédéfinies, ces moyens de mémorisation étant adressés par le numéro de ligne (NLR) et le numéro de point (NPR), du point dans le format de restitution, ainsi que par le résidu du calcul de transcodage (RESL ; RESP).

7. Dispositif selon les revendications 2 et 6, caractérisé par le fait que les moyens de transcodage (14, 15) fournissent de plus la couleur de la ligne (COUL) et du point (COUP), de chaque point de l'image de restitution, ces informations de couleur constituant un adressage supplémentaire des moyens de mémorisation.

8. Dispositif selon les revendications 6 et 7, caractérisé par le fait que les moyens de mémorisation comportent deux mémoires :
- une première mémoire (21) dite d'arrangements de couleur, adressée par les signaux de couleur ligne (COUL) et point (COUP) ;
- une deuxième mémoire (22) adressée par le signal de sortie de la première mémoire, par le numéro de ligne (NLR) et le numéro de point (NPR), du point incident dans le format de restitution, ainsi que par le résidu du calcul de transcodage (RESL, RESP).

9. Dispositif selon l'une des revendications précédentes, caractérisé par le fait qu'il comporte en outre une mémoire écran (M) assurant la mémorisation des micromatrices successives selon le format de restitution.

10. Dispositif selon la revendication 6, caractérisé par le fait qu'il comporte en outre des moyens de corrélation (C), disposés entre les moyens de génération de micromatrices et la mémoire écran, effectuant, pour chaque micromatrice, une fonction de mélange entre les parties communes à la micromatrice et au contenu de la mémoire image.

11. Dispositif selon l'une des revendications précédentes, caractérisé par le fait que la micromatrice est sélectionnée en outre en fonction de la transformation géométrique à réaliser.

## Patentansprüche

1. Vorrichtung zur Darstellung von Fernsehbildern auf einem Anzeigebildschirm, wobei das Fernsehbild ankommendes Bild genannt wird und das auf dem Schirm angezeigte Bild Wiedergabebild genannt wird, gekennzeichnet durch die Tatsache, daß sie enthält:
- Mittel (N) zur Digitalisierung des ankommenden Bildes nach Maßgabe des Empfangs von das ankommende Bild aufbauenden elementaren Punkten durch die Vorrichtung;
- Mittel (G_{AD}) zur Adressenverwaltung, die die Identifizierung der Adressen der ankommenden Punkte und die Umcodierung dieser Adressen in das Wiedergabeformat gewährleisten;
- Mittel (G_{µm}) zur Erzeugung einer mehrere Punkte enthaltenden Mikromatrix für jeden der ankommenden Punkte und nach Maßgabe ihrer Ankunft, wobei die Mikromatrix aus einer Reihe von Mikromatrizen, die im voraus hinsichtlich ihrer Größen, ihrer Formen und ihrer Inhalte definiert worden sind, in Abhängigkeit von der auszuführenden Formatumsetzung ausgewählt wird.

2. Vorrichtung nach Anspruch 1, gekennzeichnet durch die Tatsache, daß die Mittel (G_{AD}) zur Adressenverwaltung enthalten:
- Mittel (10, 11, 12, 13) zur Identifizierung der Adressen der Punkte des ankommenden Bildes;
- Mittel (14, 15) zur Umcodierung, die für jeden Punkt des ankommenden Bildes seine Zeilennummer (NLR) und seine Punktnummer (NPR) im Wiedergabeformat liefern.

3. Vorrichtung nach Anspruch 2, gekennzeichnet durch die Tatsache, daß die Umcodierungsmittel außerdem die Residuen der Umcodierungsrechnung (RESL, RESP) liefern.

4. Vorrichtung nach Anspruch 2, gekennzeichnet durch die Tatsache, daß die Identifizierungsmittel enthalten:
- erste Mittel (11) zum Liefern eines Zeilenzeichens, eines Teilbildzeichens und eines Taktsignals (H) anhand des Synchronisationsignals (SC) des ankommenden Bildes;
- einen Zeilenzähler (12) und einen Punktezähler (13), die die von den ersten Mitteln gelieferten Signale empfangen und für jeden Punkt des ankommenden Bildes seine Zeilennummer (NL) und seine Punktnummer (NP) im ankommenden Format liefern.

5. Vorrichtung nach den Ansprüchen 3 und 4, gekennzeichnet durch die Tatsache, daß die Umcodierungsmittel enthalten:
- einen Speicher (14) zur Zeilenumcodierung, der das vom Zeilenzähler gelieferte Signal (NL) empfängt;
- einen Speicher (15) zur Spaltenumcodierung, der das vom Punktezähler gelieferte Signal (NP) empfängt, wobei diese zwei Speicher die Zeilennummer (NLR) und das Zeilenresiduum (RESL) bzw. die Punktnummer (NPR) und das Punktresiduum liefern.

6. Vorrichtung nach einem der Ansprüche 2 bis 5, gekennzeichnet durch die Tatsache, daß die Mittel (G_{µm}) zur Erzeugung einer Mikromatrix Speicherungsmittel für die Reihe von im voraus definierten Mikromatrizen enthalten, wobei diese Speicherungsmittel durch die Zeilennummer (NLR) und die Punktnummer (NPR) des Punkts im Wiedergabeformat sowie durch das Residuum der Umcodierungsrechnung (RESL; RESP) adressiert werden.

7. Vorrichtung nach den Ansprüchen 2 und 6, gekennzeichnet durch die Tatsache, daß die Umcodierungsmittel (14, 15) außerdem die Farbe der Zeile (COUL) und des Punkts (COUP) jedes Punkts des Wiedergabebildes liefern, wobei diese Farbinformationen eine zusätzliche Adressierung der Speicherungsmittel bilden.

8. Vorrichtung nach den Ansprüchen 6 und 7, gekennzeichnet durch die Tatsache, daß die Speicherungsmittel zwei Speicher enthalten:
- einen ersten Speicher (21), der Farbanordnungsspeicher genannt wird und der durch die Zeilen-Farbsignale (COUL) und Spalten-Farbsignale (COUP) adressiert wird;
- einen zweiten Speicher (22), der durch das Ausgangssignal des ersten Speichers, durch die Zeilennummer (NLR) und die Punktnummer (NPR) des ankommenden Punkts im Wiedergabeformat sowie durch das Residuum der Umcodierungsrechnung (RESL, RESP) adressiert wird.

9. Vorrichtung nach einem der vorangehenden Ansprüche, gekennzeichnet durch die Tatsache, daß sie außerdem einen Bildschirmspeicher (M) enthält, der die Speicherung der entsprechend dem Wiedergabeformat aufeinanderfolgenden Mikromatrizen gewährleistet.

10. Vorrichtung nach Anspruch 6, gekennzeichnet durch die Tatsache, daß sie außerdem Korrelationsmittel (C) enthält, die zwischen den Mitteln zur Erzeugung von Mikromatrizen und dem Bildschirmspeicher angeordnet sind und für jede Mikromatrix eine Mischungsfunktion zwischen den Teilen, die der Mikromatrix und dem Inhalt des Bildspeichers gemeinsam sind, ausführen.

11. Vorrichtung nach einem der vorangehenden Ansprüche, gekennzeichnet durch die Tatsache, daß die Mikromatrix außerdem in Abhängigkeit von der auszuführenden geometrischen Transformation gewählt wird.

## Claims

1. Device for presenting television type images on a display screen, the television image being termed the incident image and the image displayed on the screen being termed the reconstruction image, characterized in that it includes:
- means (N) for digitising the incident image, as and when the device receives elementary dots forming the incident image;
- means (G_{AD}) for managing addresses, providing for the identification of the addresses of the incident dots and the transcoding of these addresses over to the reconstruction format;
- means (G_{µm}) for generating a micromatrix containing a plurality of dots, for each of the incident dots and as and when they arrive, the micromatrix being selected from a series of micromatrices which are predefined as regard their size, their shape and their content, as a function of the format conversion to be effected.

2. Device according to Claim 1, characterized in that the means (G_{AD}) for managing addresses include:
- means (10, 11, 12, 13) for identifying the addresses of the dots of the incident image;
- transcoding means (14, 15) providing, for each dot of the incident image, its row number (NLR) and its dot number (NPR) in the reconstruction format.

3. Device according to Claim 2, characterized in that the transcoding means moreover provide the residuals of the transcoding calculation (RESL, RESP).

4. Device according to Claim 2, characterized in that the identification means include:
- first means (11) for providing, from the signal (SC) for synchronising the incident image, a row cue, a frame cue, a clock signal (H);
- a row counter (12) and a dot counter (13), receiving the signals provided by the first means and providing, for each dot of the incident image, its row number (NL) and its dot number (NP) in the incident format.

5. Device according to Claims 3 and 4, characterized in that the transcoding means include:
- a row transcoding memory (14) receiving the signal (NL) provided by the row counter; receiving the
- a column transcoding memory (15) receiving the signal (NP) provided by the dot counter, these two memories respectively providing row number (NLR) and row residual (RESL), and dot number (NPR) and dot residual (RESP).

6. Device according to one of Claims 2 to 5, characterized in that the means (G_{µm}) for generating a micromatrix include means for storage of the series of predefined micromatrices, these storage means being addressed by the row number (NLR) and the dot number (NPR), of the dot in the reconstruction format, as well as by the residual of the transcoding calculation (RESL; RESP).

7. Device according to Claims 2 and 6, characterized in that the transcoding means (14, 15) moreover provide the colour of the row (COUL) and of the dot (COUP), of each dot of the reconstruction image, these colour items constituting an additional addressing of the storage means.

8. Device according to Claim 6 and 7, characterized in that the storage means include two memories:
- a first so-called colour arrangement memory (21), addressed by the row (COUL) and column (COUP) colour signals;
- a second memory (22) addressed by the output signal from the first memory, by the row number (NLR) and the dot number (NPR), of the incident dot in the reconstruction format, as well as by the residual of the transcoding calculation (RESL, RESP).

9. Device according to one of the preceding claims, characterized in that it moreover includes a screen memory (M) providing for the storage of the successive micromatrices in accordance with the reconstruction format.

10. Device according to Claim 6, characterized in that it furthermore includes correlation means (C) placed between the micromatrix generation means and the screen memory, performing, for each micromatrix, a function of mixing between the parts common to the micromatrix and to the contents of the image memory.

11. Device according to one of the preceding claims, characterized in that the micromatrix is moreover selected as a function of the geometrical transformation to be effected.
